# EUROPEAN PATENT APPLICATION

(11) **EP 1 111 504 A2**
(43) Date of publication of application: **27.06.2001**
(21) Application number: 00125377.2
(22) Date of filing: 01.12.2000
(51) Int. Cl.: G06F 9/45

(54) **Compiler processing system for generating assembly program codes for a computer comprising a plurality of arithmetic units**

(30) Priority: 06.12.1999 JP 34671899
(71) Applicant: NEC CORPORATION, Tokyo (JP)
(72) Inventor: Miyamoto, Takashi, Minato-ku, Tokyo (JP)
(74) Representative: VOSSIUS & PARTNER

(57) **Abstract**

Provided is a compiler processing system for generating assembly program codes from a source program for a computer comprising a plurality of arithmetic units, the system comprising: a front end; a machine-independent optimization portion; a code generating portion; and a machine-dependent optimization portion; wherein the machine-dependent optimization portion comprises: a non-instruction scheduling portion; and an instruction scheduling portion comprising: means for determining if an arithmetic unit is available for an inspected instruction at an execution clock concerned; means for determining if there is a substitutional instruction which performs the equivalent function as the inspected instruction if an arithmetic unit is not available for the inspected instruction; means for determining if an arithmetic unit is available at the execution clock for the substitutional instruction, if any; and means for changing the inspected instruction to the substitutional instruction if an arithmetic unit is available for the substitutional instruction.

## Description

The present invention relates to a compile processing system for converting an input program (source program) into an output program (object program) executed on an execution processing device. The conversion is executed through an instruction selecting process and an instruction scheduling process. The execution processing device has the following features a and b:
(a). having a function for executing a plurality of instructions at the same time, and
(b). there may be a plurality of types of instructions that accomplish the equivalent function; however, arithmetic units that execute those instructions are not always the same.

In such a conventional compile processing system, even if an execution processing device that executes an object program has the above-described features (a) and (b), it is not considered to change instructions in the instruction scheduling process.

An example of the conventional "Compile Processing Method That Selects And Schedules Instructions" is disclosed in the following reference (referred to as reference 1).

Steven S. Muchnick "Advanced Compiler Design Implementation" published by Steven S. Muchnick, Morgan Kaufman Publishing, Inc., 1997.

Next, thea technology disclosed in reference 1, "Technology For Compile Processing Method Including Optimizing Process Of Compiler" will be briefly described as the prior art reference.

In the prior art reference, as described in "Structure of Optimizing Compiler", Chapter 1.4, reference 1, after optimizing an internal description of compiler (referred to as intermediate language instruction codes), the intermediate language instruction codes are converted into assembly instruction codes (in other words, assembly instruction codes corresponding to intermediate language codes are selected). The "optimizing process of compiler" includes "scheduling of instructions (or rearranging of instructions)" so as to generate a high performance object program executed on an execution processing apparatus having a plurality of arithmetic units that execute a plurality of instructions at the same time. Thus, instructions of the intermediate language instruction codes that are scheduled and instructions of the assembly instruction codes have the one-to-one relation in most cases.

A detailed discussion on the scheduling of instructions is made in "Code Scheduling", Chapter 17, reference 1. The discussion mentions that when instructions are scheduled, if an inspected instruction is changed to a substitutional instruction that accomplishes the equivalent function as the inspected instruction on the basis of an analyzed result of the operation states of arithmetic units at individual execution clocks, the overall execution performance would improve. However, according to the prior art reference, such an instruction changing process is not performed.

As described in the prior art reference, in the instruction scheduling process of the conventional compile processing system, instructions are only rearranged, not changed.

When the execution processing apparatus has a plurality of arithmetic units that execute instructions, in the compile processing system that generates an program (object program) executed on the execution processing apparatus, a high performance program that allows a sequence of instructions to be properly rearranged and a plurality of instructions to be executed at the same time should be generated so as to minimize the idling states or (waiting states) of the arithmetic units.

However, the conventional compiler processing system does not take into consideration changes of instructions when performing instruction scheduling, even in case of generating an object program which is executed by a processing apparatus in which there are a plurality of instructions which achieve the equivalent function and also an arithmetic unit that executes the plurality of instructions is not determined uniquely. Therefore, there was a disadvantage that an object program which achieves overall high-performance was not obtained.

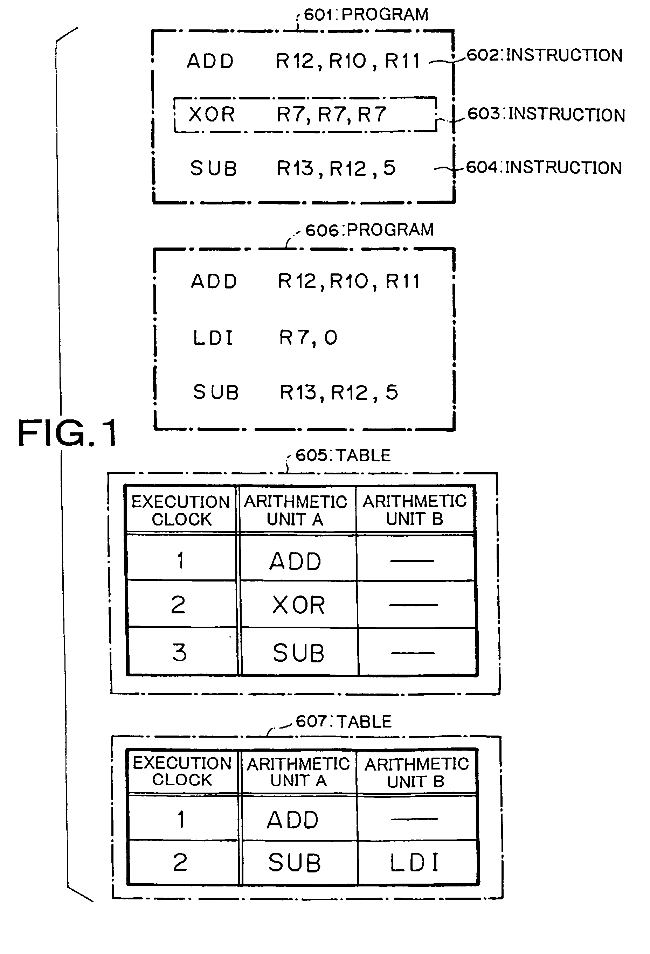

Next, such a problem will be described using a real example shown in Fig. 1.

In Fig. 1, a program 601 is an example of a program that is executed on an execution processing apparatus for which there are a plurality of instructions that accomplish the equivalent function. The execution processing apparatus that executes the program 601 can use any one of the following three instructions a to c as a function for clearing a value in a register.
a. XOR instruction which XORs a value in a register with the value in the same register.
b. LDI instruction which sets a value of "0" to a register.
c. SUB instruction which subtracts a value in a register from the value in the same register.

The execution processing apparatus has two arithmetic units A and B. The arithmetic unit A executes arithmetic operation instructions such as an XOR instruction and a SUB instruction. The arithmetic unit B executes instructions for accessing a memory (load and store instructions) and an LDI instruction.

The program 601 is composed of three instructions 602, 603, and 604. The instruction 602 is an addition instruction (ADD instruction) for storing the sum of a value in a register R10 and a value in a register R11 to a register R12. The instruction 603 is an exclusive OR instruction for exclusively ORing a value in a register R7 and the value in the register R7 and storing the result thereof to the register R7. The instruction 604 is a subtraction instruction (SUB instruction) for subtracting a constant of "5" from a value in register R12 and storing the result thereof to a register R13.

These instructions are executed by the arithmetic unit A. In the execution processing apparatus that executes the program 601, the arithmetic unit A can execute only one instruction per clock. Thus, when an object program from the program 601 is executed, three clocks are required. A table 605 shows the operation sets of both the arithmetic units A and B at individual execution clocks. Thus, according to the table 605, it is apparent that the arithmetic unit A is used at each execution clock, whereas the arithmetic unit B is in the idling state at each execution clock.

Now, if the instruction 603 which is the XOR instruction for exclusively ORing values in the same register is changed to a constant load instruction (LDI instruction) for setting a value of "0" to the register in the instruction scheduling process, a new program 606 is obtained.

The LDI instruction of the program 606 is a constant load instruction for storing the constant "0" to the register R7. The program 606 includes two instructions executed by the arithmetic unit A and one instruction executed by the arithmetic unit B. When the instruction scheduling process is executed for the program 606, the operation states of both the arithmetic units A and B at individual execution clocks becomes as shown in a table 607. As shown in the table 607, since the arithmetic unit B executes the LDI instruction, the number of clocks required for executing the program 606 is two.

In the above-described example, if an instruction is changed in the instruction scheduling process, the number of clocks required for executing the program 606 is decreased from 3 to 2. Thus, a higher performance object program than the original object program can be obtained. However, in the conventional compile processing system, since it is not considered to change an instruction in the instruction scheduling process, an object program with higher execution performance can not be obtained.

The table 607 shown in Fig. 1 describes that the LDI instruction uses the arithmetic unit B at the second execution clock. That description is only for explaining a first embodiment (that will be described later). Thus, the LDI instruction may use the arithmetic unit B at the first execution clock.

The present invention has been made to overcome the above-mentioned disadvantages. It has an object to provide a compile processing system which generates a program executed by a execution processing apparatus for which there are a plurality of instructions for realizing the equivalent function and in which arithmetic units for performing the plurality of instructions are not always the same, wherein the compile processing system generates high-performance codes (or an object program which enhances an overall execution ability) by changing instructions in parallel instruction scheduling.

According to a first aspect of the present invention, there is provided a compiler processing system for generating assembly program codes from a source program for a computer comprising a plurality of arithmetic units, the system comprising: a front end which analyzes syntax and semantics of the source program; a machine·independent optimization portion which performs machine-independent optimization for the source program; a code generating portion which generates the assembly program codes from the source program which has been optimized in the machine-independent optimization portion; and a machine-dependent optimization portion which performs machine-dependent optimization for the assembly program codes which have been generated by the code generating portion; wherein the machine-dependent optimization portion comprises: a non-instruction scheduling portion which performs optimization other than instruction scheduling; an instruction scheduling portion which performs optimization including the instruction scheduling, the instruction scheduling portion comprising: means for determining whether or not an arithmetic unit is available for an inspected instruction at an execution clock concerned; means for determining whether or not there is a substitutional instruction which performs the equivalent function as the inspected instruction if an arithmetic unit is not available for the inspected instruction; means for determining whether or not an arithmetic unit is available at the execution clock concerned for the substitutional instruction, if any; and means for changing the inspected instruction to the substitutional instruction if an arithmetic unit is available for the substitutional instruction.

According to a second aspect of the present invention, there is provided a compiler processing system for generating assembly program codes from a source program for a computer comprising a plurality of arithmetic units, the system comprising: a front end which analyzes syntax and semantics of the source program; a machine-independent optimization portion which performs machine-independent optimization for the source program; a machine-dependent optimization portion which performs machine-dependent optimization for intermediate language codes obtained from the source program; and a code generating portion which generates the assembly program codes from the intermediate language codes which have been optimized in the machine-dependent optimization portion; wherein the machine-dependent optimization portion comprises: a non-instruction scheduling portion which performs optimization other than instruction scheduling; an instruction scheduling portion which performs optimization including the instruction scheduling, the instruction scheduling portion comprising: means for determining whether or not an arithmetic unit is available for an inspected instruction at an execution clock concerned; means for determining whether or not there is a substitutional instruction which performs the equivalent function as the inspected instruction if an arithmetic unit is not available for the inspected instruction; means for determining whether or not an arithmetic unit is available at the execution clock concerned for the substitutional instruction, if any; and means for changing the inspected instruction to the substitutional instruction if an arithmetic unit is available for the substitutional instruction.

As will be described later, to accomplish the object, according to the present invention, when instructions are scheduled, the operation states of arithmetic units are checked. When necessary, instructions are changed so as to generate high performance codes. Thus, codes that reduce frequency of idling state of arithmetic units is generated. As a result, a high performance program is generated. In other words, when it is estimated that an overall execution performance is enhanced if an inspected instruction is changed to a substitutional instruction that accomplishes the equivalent function sa the inspected instruction, the inspected instruction is changed.

These and other objects, features and advantages of the present invention will become more apparent in light of the following detailed description of a best mode embodiment thereof, as illustrated in the accompanying drawings.
Fig. 1 is a schematic diagram for explaining a real operation of a compile processing system according to the present invention and a prior art reference;
Fig. 2 is a block diagram showing the structure of a compile processing system according to a first embodiment of the present invention;
Fig. 3 is a flow chart showing an instruction scheduling process (a process of a list scheduling method) of an instruction scheduling portion shown in Fig. 2;
Fig. 4 is a flow chart showing a detail of step "determining whether or not an instruction is schedulable" shown in Fig. 3;
Fig. 5 is a flow chart showing a detail of step "determining whether or not a substitutional instruction can be used by an arithmetic unit" shown in Fig. 4;
Fig. 6 is a flow chart showing a detail of step "determining whether an instruction is schedulable" shown in Fig. 3 according to the prior art reference;
Fig. 7 is a block diagram showing the structure of a compile processing system according to a second embodiment of the present invention;
Fig. 8 is a block diagram showing the structure of a compile processing system according to a third embodiment of the present invention; and
Fig. 9 is a block diagram showing the structure of a compile processing system according to a fourth embodiment of the present invention.

Next, with reference to the accompanying drawings, embodiments of the present invention will be described in detail.

### (1) First Embodiment

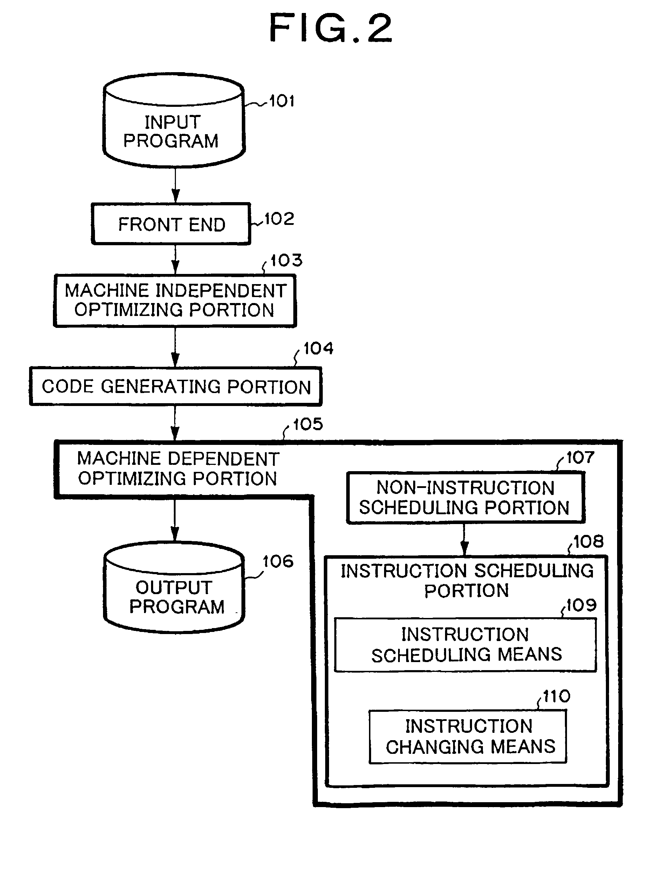

Fig. 2 is a block diagram showing the structure of a compile processing system according to a first embodiment of the present invention.

Referring to Fig. 2, a compile processing system according to the first embodiment comprises a front end 102, a machine independent optimizing portion 103, a code generating portion 104, and a machine dependent optimizing portion 105. The front end 102 reads an input program (source program) 101 and analyzes the syntax and semantics thereof. The machine independent optimizing portion 103 performs machine-independent-optimization for the input program 101. The code generating portion 104 generates a program containing assembly program codes for the execution processing apparatus. The machine dependent optimizing portion 105 performs machine-dependent-optimization for the assembly program codes to generate the output program (object program) 106.

The machine dependent optimizing portion 105 comprises a non-instruction scheduling portion 107 and an instruction scheduling portion 108. The non-instruction scheduling portion 107 performs machine-dependent optimization for the assembly program codes except for the instruction scheduling process. The instruction scheduling portion 108 performs an instruction scheduling process including a function for analyzing the operation states of arithmetic units and changing an instruction when necessary.

The instruction scheduling portion 108 comprises an instruction scheduling means 109 and an instruction changing means 110. The instruction scheduling means 109 performs an instruction scheduling process when performing optimization dependent on the execution processing apparatus for the assembly instruction codes. The instruction scheduling means 109 determines in the instruction scheduling process whether an arithmetic unit which is used for a certain instruction is available in a certain execution clock. If the arithmetic unit is not available, instruction changing means 110 determines whether the two conditions are satisfied. The two conditions are: there is a substitutional instruction which performs the equivalent function as the relevant instruction, and an arithmetic unit which is used for the substitutional instruction is available in the relevant execution clock. If the two conditions are satisfied, the instruction changing means 110 changes the relevant instruction to the substitutional instruction.

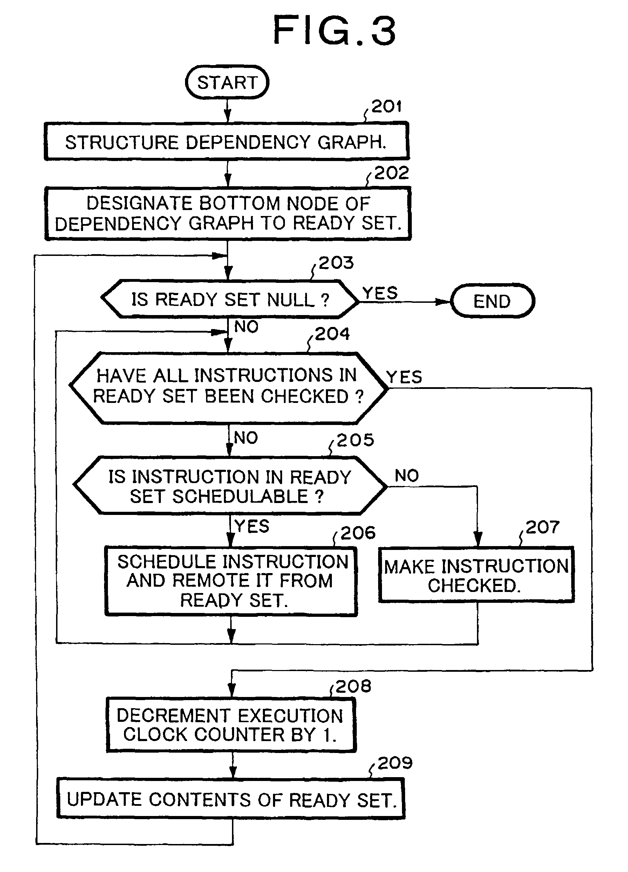

Fig. 3 is a flow chart showing the instruction scheduling process of the machine dependent optimizing portion 105 in the compile processing system according to the first embodiment. In this example, the instruction scheduling process is a conventional list scheduling process. The instruction scheduling process shown in Fig. 3 comprises step 201 of "structuring dependency graph", step 202 of "designating bottom nodes of dependency graph to ready set", step 203 of "determining whether or not the ready set is null", step 204 of "determining whether or not all the instructions in the ready set have been checked", step 205 of "determining whether a current instruction in the ready set is schedulable", step 206 of "scheduling the current instruction and removing it from the ready set", step 207 of "making the current instruction checked", step 208 of "decrementing execution clock counter by 1", and step 209 of "updating contents of the ready set".

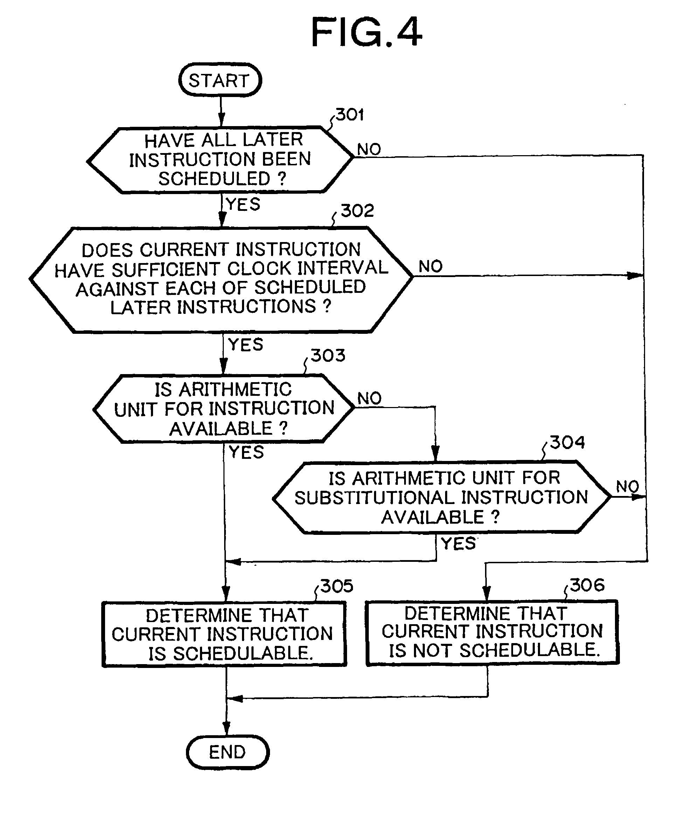

Fig. 4 is a flow chart showing a detail of the step 205 of "determining whether or not an instruction in the ready set is schedulable". The step 205 comprises step 301 of "determining whether or not all the later instructions have been scheduled", step 302 of "determining whether or not distances between a current instruction and scheduled later instructions is sufficient", step 303 of "determining availability of an arithmetic unit for the current instruction", step 304 of "determining availability of an arithmetic unit for a substitutional instruction", step 305 of "determining that the current instruction is schedulable", and step 306 of "determining that current instruction is not schedulable".

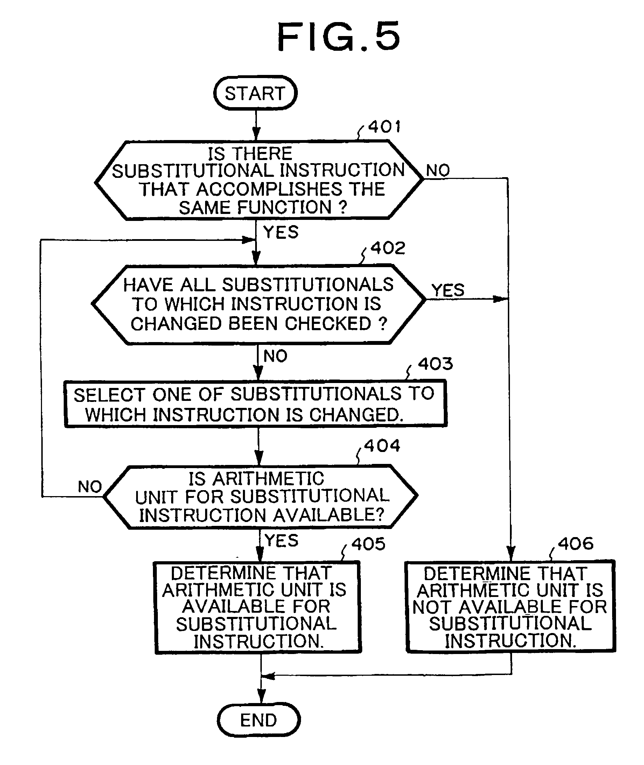

Fig. 5 is a flow chart showing a detail of the step 304 of "determining availability of an arithmetic unit for a substitutional instruction". The step 304 comprises step 401 of "determining whether or not there is a substitutional instruction accomplishing the equivalent function as an inspected instruction", step 402 "determining whether or not all the substitutional instructions have been checked", step 403 of "selecting one of substitutional instructions", step 404 of "determining whether or not an arithmetic unit is available for the selected substitutional instruction", step 405 of "changing the current instruction to the selected substitutional instruction and determining that an arithmetic is available for the selected substitutional instruction", and step 406 "determining that an arithmetic is not available for a substitutional instruction".

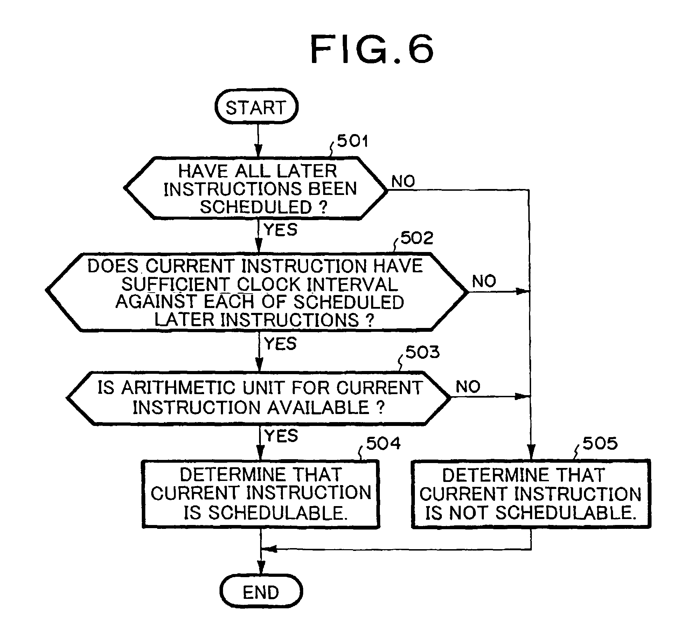

Fig. 6 is a flow chart showing a detail of the step 205 of "determining whether or not an instruction in the ready set is schedulable" shown in Fig. 3. This detail is of the prior art and for reference against the present invention as shown in Fig. 4. The step 205 according to the prior art comprises step 501 of "determining whether or not all the later instructions have been scheduled", step 502 of "determining whether or not distances between the current instruction and the later instructions is sufficient", step 503 of "determining availability of an arithmetic unit for the current instruction", step 504 of "determining that the current instruction is schedulable", and step 505 of "determining that the current instruction is not schedulable".

Next, the operation of the compile processing system according to the first embodiment will be described.

Fig. 1 is a schematic diagram for explaining a practical operation of the compile processing system according to the first embodiment of the present invention.

The compile processing system according to the first embodiment features the operation of the instruction scheduling portion 108 in the machine dependent optimizing portion 105. Next, with reference to Figs. 3 to 6, the operation of the instruction scheduling portion 108 will be mainly described. In the first embodiment, a list scheduling method is used as an example of instruction scheduling methods for simplicity. However, it should be understood that instruction scheduling methods other than the list scheduling method may be used.

In the compile processing system according to the first embodiment, as pre-processes for a process in the instruction scheduling portion 108, the front end 102 reads an input program 101 and analyzes the syntax and semantics thereof, the machine independent optimizing portion 103 performs machine-independent-optimization, the code generating portion 104 generates a program containing assembly instruction codes for the execution processing apparatus.

In addition, the non-instruction scheduling portion 107 in the machine dependent optimizing portion 105 performs machine-dependent-optimization for the program that is supplied from the code generating portion 104, except for the instruction scheduling process.

After the above processes, the instruction scheduling portion 108 in the machine dependent optimizing portion 105 performs the process shown in Fig. 3.

Next, with reference to Fig. 3, the list scheduling method performed by the instruction scheduling portion 108 will be described.

As was described above, Fig. 3 is a flow chart for explaining the list scheduling process performed by the instruction scheduling portion 108. In this example, the list scheduling process will be described corresponding to the list scheduling method disclosed in section 10. 4. 2 "List Scheduling" of "Super Scalar Processor", by Mike Johnson, Nikkei BP Publication Center, 1994 (referred to as reference 2).

In the list scheduling method, assuming that a program is pre-divided into program structure analysis units referred to as basic blocks, the process is performed for each basic block.

The instruction scheduling means 109 in the instruction scheduling portion 108 performs the following process.

The instruction scheduling means 109 checks presence of dependency, for example, dependency caused by referring to data stored by an instruction by a later instruction, with respect to all the instructions. Thereafter, the instruction scheduling means 109 structures a dependency graph (at step 201).

After structuring the dependency graph, the instruction scheduling means 109, while referring to situation regarding use of arithmetic units at each time, schedules instructions which belongs to a ready set and are able to be scheduled. Here, the ready set is defined as a set of instructions which constitute the basic block and satisfy a certain conditions.

In this case, as a final scheduling result, the instruction scheduling means 109 schedules the instruction which is performed at the final execution clock and continues the scheduling retroactively.

The instruction scheduling means 109 designates bottom nodes of the dependency graph to the ready set (at step 202). Here, a bottom node is a node of which an outward graph edge does not go out.

Thereafter, unless the ready set is null (at step 203), the instruction scheduling means 109 checks whether all the instructions in the ready set have been checked (at step 204). If NO at step 204, the instruction scheduling means 109 schedules a schedulable instruction and removes it from the ready set (at steps 205 and 206) and returns to step 204. If NO at step 204, the instruction scheduling means 109 makes a non-schedulable instruction checked (at steps 205 and 207) and returns to step 204.

If YES at step 204, the instruction scheduling means 109 decrements the execution clock counter by "1" so as to schedule instructions at an earlier clock (at step 208). Thereafter, the instruction scheduling means 109 adds instructions that come to satisfy the condition to be inculded in the ready set to the ready set (at step 209) and return to step 203.

The instruction scheduling means 109 repeats the process until all the instructions of the basic block are scheduled. Thereafter, the instruction scheduling means 109 completes the list scheduling process.

Since the instruction scheduling means 109 successively decrements the execution clock counter, it is assured that even an inspected instruction that does not satisfy a condition to be included in the ready set for the first time will finally satisfies the condition.

In that case, step 205 of "determining whether or not an instruction in the ready set is schedulable" is important. Next, a detail of step 205 of "determining whether or not an instruction is schedulable" in the list scheduling method according to the prior art reference will be described with reference to Fig. 6.

To determine whether or not an inspected instruction is schedulable, a conventional instruction scheduling means determines whether or not instructions corresponding to nodes which are end points of graph edges starting from a node of the inspected instruction have been already scheduled (at step 501). Hereinafter, the instructions corresponding to nodes which are end points of graph edges starting from a node of an inspected instruction are referred to as later instructions with respect to the inspected instruction.

When the determined result at step 501 is No (namely, there is at least one later instruction that has not been scheduled), the conventional instruction scheduling means determines that the current instruction is not schedulable (at step 505).

When the determined result at step 501 is Yes (namely, all the later instructions have been scheduled), the conventional instruction scheduling means determines whether or not necessary clock distances between the later instructions and the current instruction is sufficient for a supposed case where the current instruction is executed at the present execution clock counter (at step 502). The necessary clock distances are usually the same as the number of clocks necessary for executing the current instruction.

When the determined result at step 502 is No (namely, at least one of the necessary distances is not sufficient), the conventional instruction scheduling means determines that the current instruction is not schedulable at the current execution clock counter (at step 505).

When the determined result at step 502 is Yes (namely, all the necessary clock distances are sufficient), the conventional instruction scheduling means determines whether or not an arithmetic unit used for the current instruction is available (at step 503).

When the determined result at step 503 is Yes (namely, the arithmetic unit for the current instruction is available), the conventional instruction scheduling means determines that the current instruction is schedulable (at step 504). On the other hand, when the determined result at step 503 is No (namely, the arithmetic unit for the current instruction is not available), the conventional instruction scheduling means determines that the current instruction is not schedulable (at step 505).

As explained above, it is not taken into account to change an instruction when it is determined whether or not an instruction is schedulable according to the prior art reference.

In contrast, the instruction scheduling means 109 in the instruction scheduling portion 108 according to the first embodiment not only uses the list scheduling method as shown in Fig. 3 but also performs the step for determining whether or not an instruction in the ready set is schedulable as shown in Fig. 4 instead of Fig. 6.

In other words, according to the instruction scheduling process by the compile processing system according to the first invention of the present invention, the step of "determining whether an instruction is schedulable" is different from that shown in Fig. 6. Next, a detail of the step of "determining whether or not an instruction is schedulable" will be described with reference to a flow chart shown in Fig. 4.

The instruction scheduling means 109 in the instruction scheduling portion 108 performs the following steps in step 205 of "determining whether or not an instruction in the ready set is schedulable" as shown in Fig. 3. The detailed process as shown in Fig. 5 is the same as the detailed process as shown in Fig. 6 except for step 304. However, for easily understanding the flow of the process, the other steps will be described besides step 304, though a part of the description will duplicates.

To determine whether or not an inspected instruction is schedulable, the instruction scheduling means 109 determines whether or not all the later instructions with respect to the inspected instruction on the dependency graph have been already scheduled (at step 301).

When the determined result at step 301 is No (namely, there is at least one later instruction that has not been scheduled), the instruction scheduling means 109 determines that the current instruction is not schedulable (at step 306).

When the determined result at step 301 is Yes (namely, all the later instructions have been scheduled), the instruction scheduling means 109 determines whether or not necessary clock distances between the later instructions and the current instruction is sufficient for a supposed case where the current instruction is executed at the present execution clock counter (at step 302).

When the determined result at step 302 is No (namely, at least one of the necessary distances is not sufficient), the instruction scheduling means 109 determines that the current instruction is not schedulable at the current execution clock counter (at step 306).

When the determined result at step 302 is Yes (namely, all the necessary clock distances are sufficient), the instruction scheduling means 109 determines whether or not an arithmetic unit used for the current instruction is available (at step 303).

When the determined result at step 303 is Yes (namely, the arithmetic unit for the current instruction is available), the instruction scheduling means 109 determines that the current instruction is schedulable (at step 305).

In the conventional list scheduling method (see Fig. 6), when the arithmetic unit for the current instruction is not available, the instruction scheduling means 109 immediately determines that the current instruction is not schedulable. In contrast, according to the first embodiment of the present invention, when the arithmetic unit for the current instruction is not available, the instruction scheduling means 109 further determines whether or not the current instruction can be changed to a substitutional instruction and an arithmetic unit for the substitutional instruction at the current execution clock (at step 304). When the determined result at step 304 is Yes, the instruction scheduling means 109 changes the current instruction to the substitutional instruction and determines the current instruction is schedulable (at step 305).

When the determined result at step 304 is No (namely, the current instruction cannot be changed to a substitutional instruction, or even if the current instruction can be changed to a substitutional instruction, an arithmetic unit which can execute the substitutional instruction is not available at the current execution clock), the instruction scheduling means 109 determines that the current instruction is not schedulable (at step 306).

When the current instruction is changed at step 304, the instruction scheduling means 109 passes the control to the instruction changing means 110.

The instruction changing means 110 performs a process for changing an instruction as shown in Fig. 5.

The instruction changing means 110 determines whether or not there is at least a substitutional instruction that accomplishes the equivalent function as the current instruction (at step 401).

When the determined result at step 401 is No (namely, there is no substitutional instruction), the instruction changing means 110 determines that an arithmetic unit is not available for a substitutional instruction at the current execution clock (at step 406). Such determination is equivalent to determination that there is no substitutional instruction.

When the determined result at step 401 is Yes (namely, there is at least a substitutional instruction), the instruction changing means 110 determines whether or not all the substitutional instructions have been checked (at steps 402). Thereafter, the instruction changing means 110 selects one of the substitutional instructions (at step 403). Thereafter, the instruction changing means 110 determines whether or not the arithmetic unit is available for the selected substitutional instruction at the current execution clock (at step 404).

When the determined result at step 404 is Yes (namely, there is at least one substitutional instruction that can use an arithmetic unit at the current clock, the instruction changing means 110 determines that the current instruction can be changed to a substitutional instruction and an arithmetic unit is available for the substitutional instruction (at step 405).

On the other hand, when there is no arithmetic unit available for any substitutional instruction (when exiting the loop of steps 402-404 from step 402 instead of step 404), the instruction changing means 110 determines that an arithmetic is not available for a substitutional instruction (step 406).

Next, an example of the instruction changing process in the compile processing system according to the first embodiment will be described with reference to Fig. 6 which was also used for explaining an disadvantage of the prior art.

In the program 601 shown in Fig. 1, since the calculated result of the instruction 602 (ADD instruction) is referenced by the instruction 604 (SUB instruction), there is a dependency between these instructions. Thus, according to the list scheduling method, the instruction changing means 110 determines whether or not the instruction 604 and the instruction 603 (XOR instruction) that are elements in a ready set are schedulable. Although the instruction changing means 110 can inspect the elements in the ready set in any order, the instruction changing means 110 inspects the instruction 604 firstly and the instruction 603 secondly because the instruction 604 references the calculated result of the instruction 602.

Since the arithmetic unit A is available for the instruction 604 (SUB instruction), the instruction 604 is schedulable. On the other hand, the arithmetic unit A is already used for the instruction 604 at the current execution clock, the instruction 603 (XOR instruction) is not schedulable if the instruction is not changed.

In the list scheduling process of the compile processing system according to the prior art reference, the conventional instruction scheduling means determines that the instruction 603 is not schedulable at the same current execution clock as the instruction 604. Thus, the instruction scheduling means 109 does not schedule the instruction 603 (XOR instruction) at the same execution clock as the instruction 604. As a result, the program 601 is scheduled as shown in the table 605.

However, in the instruction scheduling process according to the first embodiment of the present invention, the instruction scheduling means 109 determines whether there is at least a substitutional instruction which is equivalent to the instruction 603 (XOR instruction), that is, has the equivalent function as the instruction 603. Thereafter, the instruction scheduling means 109 determines whether or not there is among all the substitutional instructions at least a substututional instruction for which an arithmetic unit is available in the condition of the use of arithmetic units by other instructions at the current execution clock. As a result, with the help of the instruction changing means 110, the instruction scheduling means 109 determines that an LDI instruction which achieves the equivalent function as the instruction 604 (the XOR instruction) is executable on the arithmetic B available therefor at the same execution clock as the instruction 604. Therefore, the instruction scheduling means 109 makes a schedule in which the LDI instruction is executed at the same execution clock as the instruction 604 (the SUB instruction). Therefore, the program 601 is modified to the program 606 and the scheduling becomes as represented by table 607 (shown in Fig. 6).

The schedule obtained by the prior art as represented by table 605 requires three execution clocks, whereas the schedule obtained by the first embodiment as represented by table 607 requires only two clocks. Therefore, it is apparent the compiler processing system according to the first embodiment outputs a high-performance output program.

### (2) Second Embodiment

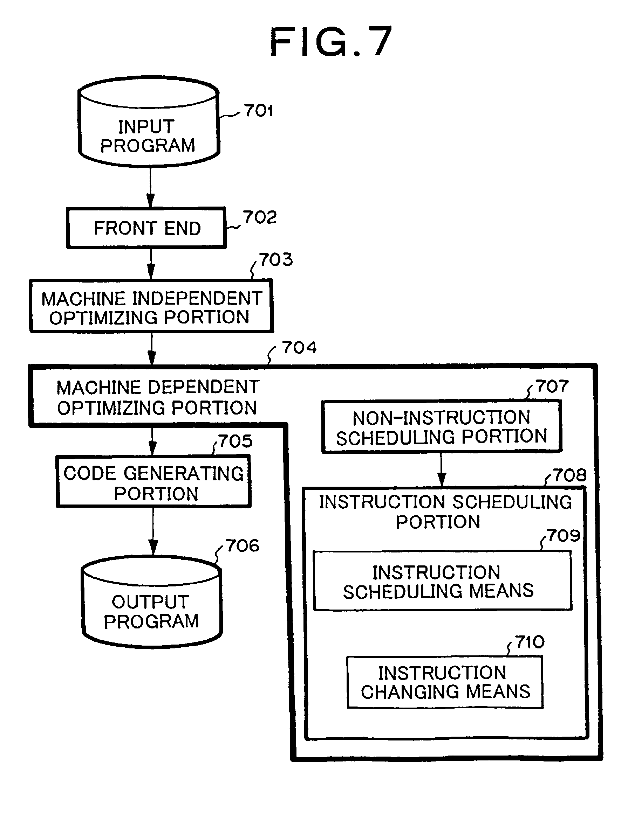

Fig. 7 is a block diagram showing the structure of a compile processing system according to a second embodiment of the present invention.

Referring to Fig. 7, the compile processing system according to the second embodiment comprises a front end 702, a machine independent optimizing portion 703, a machine dependent optimizing portion 704, and a code generating portion 705. The front end 702 reads an input program 701 and analyzes the syntax and semantics thereof. The machine independent optimizing portion 703 performs machine-independent-optimization for the input program 701. The machine dependent optimizing portion 704 optimizes intermediate language instruction codes dependent on the execution processing apparatus. The code generating portion 705 generates the output program (assembly program codes) 706 for the execution processing apparatus.

The code generating portion 705 comprises a non-instruction scheduling portion 707 and an instruction scheduling portion 708. The non-instruction scheduling portion 707 performs an optimizing process dependent on the execution processing apparatus except for an instruction scheduling process. The instruction scheduling portion 708 performs an instruction scheduling process including a function for analyzing the operation states of arithmetic units and changing an instruction when necessary.

The instruction scheduling portion 708 comprises an instruction scheduling means 709 and an instruction changing means 710. The instruction scheduling means 709 performs an instruction scheduling process while optimizing the intermediate language instruction codes dependent on the execution processing apparatus. The instruction changing means 710 changes an inspected instruction to a substitutional instruction in the instruction scheduling process of the instruction scheduling means 709 when three conditions are satisfied. The three conditions are: there is no available arithmetic unit for the inspected instruction, there is a substitutional instruction which performs the equivalent function as the relevant instruction, and an arithmetic unit which is used for the substitutional instruction is available in the relevant execution clock.

The second embodiment is different from the first embodiment in that the machine dependent optimizing portion 704 is disposed upstream of the code generating portion 705. In other words, according to the second embodiment, the machine dependent optimizing portion 704 optimizes the intermediate language instruction codes rather than the assembly instruction codes. However, for the instruction scheduling process of the instruction scheduling portion 708, the intermediate language instruction codes and the assembly instruction codes have the one-to-one relation in most cases.

Thus, in the instruction scheduling process, the assembly instruction codes according to the first embodiment and the intermediate language instruction codes according to the second embodiment have the one-to-one relation in most cases. As a result, the instruction scheduling process and the instruction changing process according to the second embodiment are the same as those according to the first embodiment.

### (3) Third Embodiment

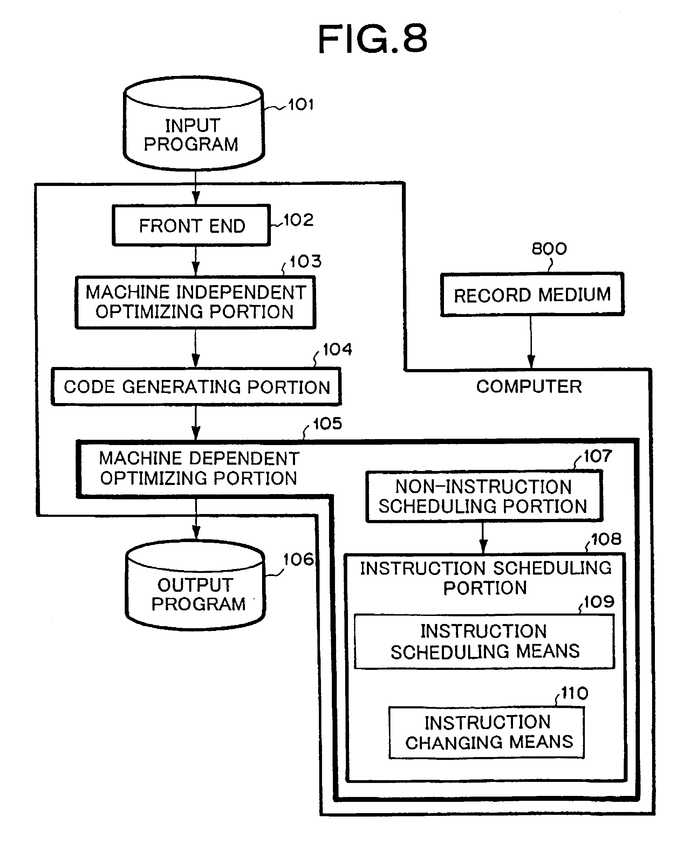

Fig. 8 is a block diagram showing the structure of a compile processing system according to a third embodiment of the present invention.

Referring to Fig. 8, the compile processing system according to the third embodiment is different from that according to the first embodiment in that a record medium 800 is used for recording a program for realizing the function of the computer comprising the front end 102, the machine independent optimizing portion 103, the code generating portion 104, and the machine dependent optimizing portion 105. The computer reads the program from the record medium 800 and executes the program to realize the function of the computer.

### (4) Fourth Embodiment

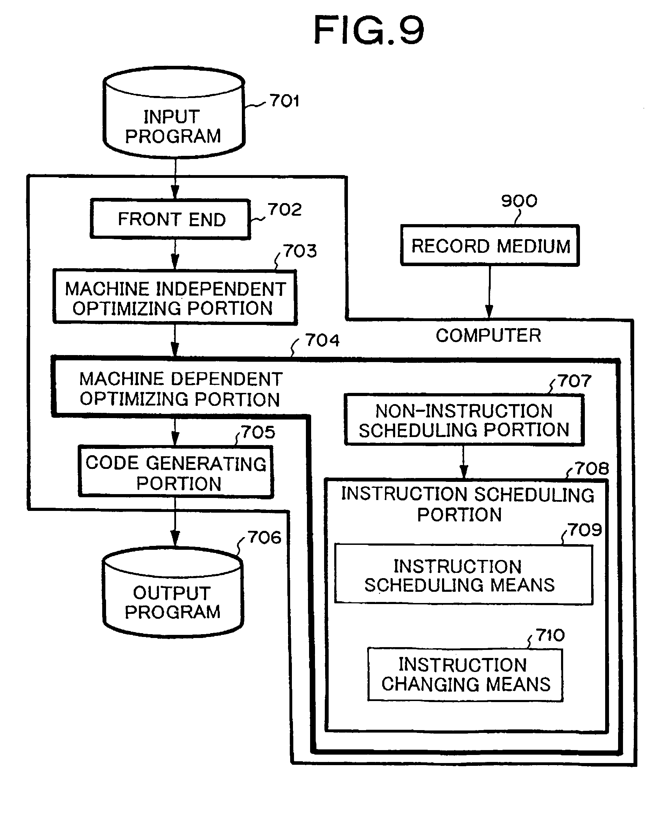

Fig. 9 is a block diagram showing the structure of a compile processing system according to a third embodiment of the present invention.

Referring to Fig. 9, the compile processing system according to the fourth embodiment is different from that according to the second embodiment in that a record medium 900 is used for recording a program for realizing the function of the computer comprising the front end 702, the machine independent optimizing portion 703, the machine dependent optimizing portion 704, and the code generating portion 705. The computer reads the program from the record medium 900 and executes the program to realize the function of the computer.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. A compiler processing system for generating assembly program codes from a source program for a computer comprising a plurality of arithmetic units, said system comprising:
a front end which analyzes syntax and semantics of said source program;
a machine-independent optimization portion which performs machine-independent optimization for said source program;
a code generating portion which generates said assembly program codes from said source program which has been optimized in said machine-independent optimization portion; and
a machine-dependent optimization portion which performs machine-dependent optimization for said assembly program codes which have been generated by said code generating portion;
wherein said machine-dependent optimization portion comprises:
a non-instruction scheduling portion which performs optimization other than instruction scheduling;
an instruction scheduling portion which performs optimization including said instruction scheduling, said instruction scheduling portion comprising:
means for determining whether or not an arithmetic unit is available for an inspected instruction at an execution clock concerned;
means for determining whether or not there is a substitutional instruction which performs the equivalent function as said inspected instruction if an arithmetic unit is not available for said inspected instruction;
means for determining whether or not an arithmetic unit is available at said execution clock concerned for said substitutional instruction, if any; and
means for changing said inspected instruction to said substitutional instruction if an arithmetic unit is available for said substitutional instruction.

2. A compiler processing system for generating assembly program codes from a source program for a computer comprising a plurality of arithmetic units, said system comprising:
a front end which analyzes syntax and semantics of said source program;
a machine-independent optimization portion which performs machine-independent optimization for said source program;
a machine-dependent optimization portion which performs machine-dependent optimization for intermediate language codes obtained from said source program; and
a code generating portion which generates said assembly program codes from said intermediate language codes which have been optimized in said machine-dependent optimization portion;
wherein said machine-dependent optimization portion comprises:
a non-instruction scheduling portion which performs optimization other than instruction scheduling;
an instruction scheduling portion which performs optimization including said instruction scheduling, said instruction scheduling portion comprising:
means for determining whether or not an arithmetic unit is available for an inspected instruction at an execution clock concerned;
means for determining whether or not there is a substitutional instruction which performs the equivalent function as said inspected instruction if an arithmetic unit is not available for said inspected instruction;
means for determining whether or not an arithmetic unit is available at said execution clock concerned for said substitutional instruction, if any; and
means for changing said inspected instruction to said substitutional instruction if an arithmetic unit is available for said substitutional instruction.

3. A method for generating assembly program codes from a source program for a computer comprising a plurality of arithmetic units, said method comprising the steps of:
analyzing syntax of said source program;
analyzing semantics of said source program;
performing machine-independent optimization for said source program;
generating said assembly program codes from said source program which has been optimized; and
performsing machine-dependent optimization for said assembly program codes;
wherein said machine-dependent optimization comprises the steps of:
performing optimization other than instruction scheduling;
performing optimization including said instruction scheduling, said instruction scheduling comprising the steps of:
determining whether or not an arithmetic unit is available for an inspected instruction at an execution clock concerned;
determining whether or not there is a substitutional instruction which performs the equivalent function as said inspected instruction if an arithmetic unit is not available for said inspected instruction;
determining whether or not an arithmetic unit is available at said execution clock concerned for said substitutional instruction, if any; and
changing said inspected instruction to said substitutional instruction if an arithmetic unit is available for said substitutional instruction.

4. A method for generating assembly program codes from a source program for a computer comprising a plurality of arithmetic units, said method comprising the steps of:
analyzing syntax of said source program;
analyzing semantics of said source program;
performing machine-independent optimization for said source program;
performing machine-dependent optimization for intermediate language codes obtained from said source program; and
generating said assembly program codes from said intermediate language codes which have been optimized;
wherein said machine-dependent optimization comprises the steps of:
performing optimization other than instruction scheduling;
performing optimization including said instruction scheduling, said instruction scheduling comprising the steps of:
determining whether or not an arithmetic unit is available for an inspected instruction at an execution clock concerned;
determining whether or not there is a substitutional instruction which performs the equivalent function as said inspected instruction if an arithmetic unit is not available for said inspected instruction;
determining whether or not an arithmetic unit is available at said execution clock concerned for said substitutional instruction, if any; and
changing said inspected instruction to said substitutional instruction if an arithmetic unit is available for said substitutional instruction.

5. A computer program for having a computer execute a method for generating assembly program codes from a source program for a computer comprising a plurality of arithmetic units, said method comprising the steps of:
analyzing syntax of said source program;
analyzing semantics of said source program;
performing machine-independent optimization for said source program;
generating said assembly program codes from said source program which has been optimized; and
performsing machine-dependent optimization for said assembly program codes;
wherein said machine-dependent optimization comprises the steps of:
performing optimization other than instruction scheduling;
performing optimization including said instruction scheduling, said instruction scheduling comprising the steps of:
determining whether or not an arithmetic unit is available for an inspected instruction at an execution clock concerned;
determining whether or not there is a substitutional instruction which performs the equivalent function as said inspected instruction if an arithmetic unit is not available for said inspected instruction;
determining whether or not an arithmetic unit is available at said execution clock concerned for said substitutional instruction, if any; and
changing said inspected instruction to said substitutional instruction if an arithmetic unit is available for said substitutional instruction.

6. A computer program for having a computer execute a method for generating assembly program codes from a source program for a computer comprising a plurality of arithmetic units, said method comprising the steps of:
analyzing syntax of said source program;
analyzing semantics of said source program;
performing machine-independent optimization for said source program;
performing machine-dependent optimization for intermediate language codes obtained from said source program; and
generating said assembly program codes from said intermediate language codes which have been optimized;
wherein said machine-dependent optimization comprises the steps of:
performing optimization other than instruction scheduling;
performing optimization including said instruction scheduling, said instruction scheduling comprising the steps of:
determining whether or not an arithmetic unit is available for an inspected instruction at an execution clock concerned;
determining whether or not there is a substitutional instruction which performs the equivalent function as said inspected instruction if an arithmetic unit is not available for said inspected instruction;
determining whether or not an arithmetic unit is available at said execution clock concerned for said substitutional instruction, if any; and
changing said inspected instruction to said substitutional instruction if an arithmetic unit is available for said substitutional instruction.

7. An instruction scheduler for scheduling instructions for a computer comprising a plurality of arithmetic units, said system scheduler comprising:
means for determining whether or not an arithmetic unit is available for an inspected instruction at an execution clock concerned;
means for determining whether or not there is a substitutional instruction which performs the equivalent function as said inspected instruction if an arithmetic unit is not available for said inspected instruction;
means for determining whether or not an arithmetic unit is available at said execution clock concerned for said substitutional instruction, if any; and
means for changing said inspected instruction to said substitutional instruction if an arithmetic unit is available for said substitutional instruction.

8. A method for scheduling instructions for a computer comprising a plurality of arithmetic units, said method comprising the steps of:
determining whether or not an arithmetic unit is available for an inspected instruction at an execution clock concerned;
whether or not there is a substitutional instruction which performs the equivalent function as said inspected instruction if an arithmetic unit is not available for said inspected instruction;
determining whether or not an arithmetic unit is available at said execution clock concerned for said substitutional instruction, if any; and
changing said inspected instruction to said substitutional instruction if an arithmetic unit is available for said substitutional instruction.

9. A computer program for having a computer execute a method for scheduling instructions for a computer comprising a plurality of arithmetic units, said method comprising the steps of:
determining whether or not an arithmetic unit is available for an inspected instruction at an execution clock concerned;
whether or not there is a substitutional instruction which performs the equivalent function as said inspected instruction if an arithmetic unit is not available for said inspected instruction;
determining whether or not an arithmetic unit is available at said execution clock concerned for said substitutional instruction, if any; and
changing said inspected instruction to said substitutional instruction if an arithmetic unit is available for said substitutional instruction.
